# EUROPEAN PATENT SPECIFICATION

(11) **EP 3 596 906 B1**
(45) Date of publication and mention of the grant of the patent: **20.10.2021**
(21) Application number: 19725905.4
(22) Date of filing: 28.02.2019
(51) Int. Cl.: G06F 21/64, H04L 29/06, H04L 9/32

(54) **SYSTEM AND METHOD FOR BLOCKCHAIN-BASED AUTHENTICATION**
SYSTEM UND VERFAHREN ZUR BLOCKCHAIN-BASIERTEN AUTHENTIFIZIERUNG
SYSTÈME ET PROCÉDÉ D'AUTHENTIFICATION BASÉE SUR UNE CHAÎNE DE BLOCS

(43) Date of publication of application: 22.01.2020
(60) Divisional application: 21185116.7
(73) Proprietor: Advanced New Technologies Co., Ltd., George Town, Grand Cayman KY1-9008 (KY)
(72) Inventor: CHENG, Long, Zhejiang 311121 (CN); LI, Yanpeng, Zhejiang 311121 (CN)
(74) Representative: Branderhorst, Matthijs Pieter Arie
(86) International application number: PCT/CN2019/076463
(87) International publication number: WO 2019/101224

(56) References cited:
- CN-A- 108 696 511
- CN-A- 108 805 571
- CN-A- 108 881 262
- US-A1- 2017 257 358
- US-A1- 2017 295 157
- US-A1- 2018 308 098
- US-A1- 2018 322 491
- LI CHUNHUA ET AL: "Using Blockchain for Data Auditing in Cloud Storage", 13 September 2018 (2018-09-13), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 335 - 345, XP047485227, ISBN: 978-3-642-17318-9 [retrieved on 2018-09-13] * the whole document *

## Description

### TECHNICAL FIELD

This application generally relates to methods and devices for blockchain-based authentication.

### BACKGROUND

In current technologies, most entities manage their own accounts and operations. Data collected for audit (e.g., account activity log, account user information such as user identification and authorization level) often comes from the entity-maintained system. For example, financial entities usually deploy and operate their own systems, which regularly grant user accesses to the financial systems and processing transactions. An exemplary requirement may be that the user initiating a transaction from the bank side cannot be the same person reviewing and approving the transaction. Another exemplary requirement may be that only users of certain positions in the entity can authorize transactions during certain time windows. An audit organization may audit financial entities to confirm whether the financial entities comply with such requirements. For privacy and business secrecy reasons, the financial entities store and manage the operation data internally, rather than trusting the data with a third party. To further self-interest or for another reason, data collected for audit may be susceptible to inaccuracy, untruthful manipulation, or even fraud, which adversely affects the credibility of the audit. It is therefore desirable to have a system that can reduce data inaccuracy, manipulation, or fraud. US 2018/308098 describes a method in which logic on a remote device causes the capture of personal data identifying a user from an identification card. US 207/257358 describes a method of authentication including sending a login web page to a first device of a user including a scannable envelope ID and a login challenge. CN 108696511 describes a method of announcing information for verification of public information data.

### SUMMARY

This disclosure describes a computer-implemented authentication method as defined by claim 1. Various embodiments of the specification include, but are not limited to, systems, methods, and non-transitory computer readable media for blockchain-based authentication.

According to one aspect, a computer-implemented authentication method comprises: obtaining audit data for authentication against operation information associated with an executed transaction; generating a digital abstract of the audit data; retrieving a digital abstract of the operation information from a blockchain; and determining authenticity of the audit data by verifying the generated digital abstract of the audit data against the retrieved digital abstract of the operation information. Before obtaining the audit data, the method may further comprise: transmitting the digital abstract of the operation information to one or more nodes of the blockchain for storage in the blockchain.

In some embodiments, determining the authenticity of the audit data by verifying the generated digital abstract of the audit data against the retrieved digital abstract of the operation information comprises: in response to determining that the generated digital abstract of the audit data is consistent with the retrieved digital abstract of the operation information, determining that the audit data is authentic; and in response to determining that the generated digital abstract of the audit data is inconsistent with the retrieved digital abstract of the operation information, determining that the audit data is unauthentic.

In other embodiments, retrieving the digital abstract of the operation information from the blockchain comprises retrieving the digital abstract of the operation information from the blockchain according to a blockchain transaction identification associated with the digital abstract of the operation information.

In still other embodiments, before obtaining the audit data, the method further comprises: in response to a login, generating a digital abstract of identity information for the login; transmitting the digital abstract of the identity information to one or more nodes of the blockchain for storage in the blockchain; obtaining a blockchain transaction identification associated with the digital abstract of the identity information; executing the transaction; generating the digital abstract of the operation information, wherein the operation information includes transaction information of the transaction and one or more of: the digital abstract of the identity information, the identity information, and the blockchain transaction identification associated with the digital abstract of the identity information; transmitting the digital abstract of the operation information to one or more nodes of the blockchain for storage in the blockchain; and obtaining the blockchain transaction identification associated with the digital abstract of the operation information.

In yet other embodiments, the transaction information of the transaction comprises one or more URLs (uniform resource locators) for executing the transaction.

In some embodiments, the transaction information of the transaction comprises one or more parameters for invoking the one or more URLs and one or more returned results from invoking the one or more URLs.

In other embodiments, the identity information comprises an authorization level of a user authorizing the execution of the transaction.

In still other embodiments, the identity information comprises an authorization level of a user requesting the execution of the transaction.

In yet other embodiments, transmitting the digital abstract of the operation information to one or more nodes of the blockchain for storage in the blockchain comprises: writing the digital abstract of the operation information and a cryptographic process used for generating the digital abstract of the operation information into a blockchain contract; and causing the one or more nodes to initiate a blockchain transaction to deploy the blockchain contact.

In some embodiments, generating the digital abstract of the audit data comprises generating the digital abstract of the audit data based on the cryptographic process used for generating the digital abstract of the operation information.

In other embodiments, the blockchain is a consortium blockchain.

In still other embodiments, the digital abstract of the operation information comprises a hash value of the operation information. The blockchain transaction identification comprises a transaction hash value of the blockchain transaction.

In some other embodiments, the operation information comprises transaction information of the transaction.

In other embodiments, an authentication system comprises one or more processors and one or more computer-readable memories coupled to the one or more processors and having instructions stored thereon that are executable by the one or more processors to perform the method of any of the preceding embodiments.

In still other embodiments, an authentication apparatus comprises a plurality of modules for performing the method of any of the preceding embodiments.

According to another aspect, an authentication system comprises one or more processors and one or more non-transitory computer-readable memories coupled to the one or more processors and configured with instructions executable by the one or more processors to cause the system to perform operations comprising: obtaining audit data for authentication against operation information associated with an executed transaction; generating a digital abstract of the audit data; retrieving a digital abstract of the operation information from a blockchain; and determining authenticity of the audit data by verifying the generated digital abstract of the audit data against the retrieved digital abstract of the operation information.

According to another aspect, a non-transitory computer-readable storage medium is configured with instructions executable by one or more processors to cause the one or more processors to perform operations comprising: obtaining audit data for authentication against operation information associated with an executed transaction; generating a digital abstract of the audit data; retrieving a digital abstract of the operation information from a blockchain; and determining authenticity of the audit data by verifying the generated digital abstract of the audit data against the retrieved digital abstract of the operation information.

According to another aspect, an authentication apparatus may comprise an obtaining module for obtaining audit data for authentication against operation information associated with an executed transaction; a generating module for generating a digital abstract of the audit data; a retrieving module for retrieving a digital abstract of the operation information from a blockchain; and a determining module for determining authenticity of the audit data by verifying the generated digital abstract of the audit data against the retrieved digital abstract of the operation information.

Embodiments disclosed in the specification have one or more technical effects. In some embodiments, the methods and systems can provide the storage of the original data (e.g., operation information associated with an executed transaction) for authenticating against audit data that is supposed to be the same as the original data. Storage in the blockchain allows for accurate record keeping of the original data. In other embodiments, when a transaction is executed, a representation of the transaction is packed into the blockchain and become immutable. In still other embodiments, the methods and systems provide the abilities to check the authenticity of the audit data by comparing against the blockchain-stored original data. In yet other embodiments, a digital abstract of the audit data can be compared with a blockchain-stored digital abstract of the original data to ensure that the audit data has not been tampered. This prevents inaccuracy, deficiency, manipulation, and fraud in furnishing the audit data. In some embodiments, the blockchain storage of the original data as a digital abstract achieves truthful recording of information while ensuring privacy protection. In other embodiments, the digital abstract is consensus-verified by various blockchain nodes, but does not reveal the contents of the original data. Thus, the original data is kept private. In still other embodiments, the methods and systems provide the abilities to include information needed for audit in the digital abstract. In yet other embodiments, the identity and authorization level of the user performing the original transaction can be associated with the original data (e.g., the original transaction) and be included in the digital abstract. This provides sufficient information retrievable for authenticating audit data that is going to be audited by audit authorities. As a result, the authenticity and quality of the audit is enhanced.

These and other features of the systems, methods, and non-transitory computer readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as limiting.

### BRIEF DESCRIPTION OF THE DRAWINGS

FIG. 1 illustrates an example of a blockchain-based authentication system, in accordance with various embodiments.
FIG. 2 illustrates an example of a blockchain network, in accordance with various embodiments.
FIG. 3 illustrates an example of a method for storing data to blockchain, in accordance with various embodiments.
FIG. 4 illustrates an example of a method for data anchoring and verification, in accordance with various embodiments.
FIG. 5 illustrates a flow chart of an example of a method for blockchain-based authentication, in accordance with various embodiments.
FIG. 6 illustrates a block diagram of an example of a blockchain-based authentication computer system, in accordance with various embodiments.
FIG. 7 illustrates a block diagram of an example of a computer system in which any of the embodiments described herein may be implemented.

### DETAILED DESCRIPTION

Embodiments disclosed herein include, but are not limited to, blockchain-based authentication systems, methods, and non-transitory computer readable media. In various embodiments, a digital abstract of operation information (e.g., financial transaction data) is stored to a blockchain by anchoring. The stored digital abstract can be retrieved from blockchain and used to verify against data provided for audit. Authenticity and originality of the stored digital abstract can be ensured based on the immutability, consistency, and accuracy of blockchain. In some embodiments, attempts of data tempering can be prevented. In other embodiments, storing the abstract can prevent excessive disclosure of key information as in storing plaintext information. In yet other embodiments, the risk of information leak is reduced, the chance for hiding information is lowered, and/or the security of the audit data is enhanced.

In various embodiments, the disclosed authentication systems, methods, and non-transitory computer readable media may be based on various types of blockchains depending on who is allowed to participate in the network, execute the consensus protocol, and maintain the shared blockchain ledger. The various types of blockchain may include, for example, public blockchain, consortium blockchain, private blockchain, etc. The description hereinafter refers to consortium blockchain. Notwithstanding, the disclosed authentication systems, methods, and non-transitory computer readable media may be applied with respect to other types of blockchain as well.

A blockchain may be considered a decentralized or partially centralized database, commonly referred to as a distributed ledger because the operation is performed by various nodes (e.g., computing devices) in a network. Any information may be written to the blockchain and saved or read from it. Nodes are, for example, computing devices or large computer systems that support the blockchain network and keep it running smoothly. Each node may provide a part or all of the functions of the blockchain. For example, a node that provides consensus verification may be referred to as a consensus-participating node (or consensus node). Consensus may be an algorithm of rules for a network of blockchain nodes to achieve commonly-accepted processing results. Through consensus, data is continuously added into a chain of blocks. If changes are made to a block, its link to the preceding block in the chain becomes invalid, and it becomes visible to all network participants who, through the consensus rules, may prevent any further unauthorized actions.

Consortium blockchain refers to a blockchain with consensus procedures controlled by preset nodes. The blockchain may allow everyone or only approved participants to access or adopt a hybrid access method. For example, the root hash and its API (Application Program Interface) may be open to the public; external parties are allowed to use API to make a certain number of inquiries and obtain information relating to blockchain status.

Consortium blockchains can best be understood when compared to their more popular counterpart, public blockchains. A public blockchain possesses no access restriction, meaning that absolutely anyone with an internet connection can become a participant of a public blockchain. More specifically, anyone in the world is able to read data that can be included on the blockchain, and anyone in the world is allowed to execute blockchain transactions on a public blockchain. Also, there is no restriction as to who can participate in the consensus process for blockchains, which is the process that determines the individual or entity that can add a block to the blockchain. Public blockchains are considered to be fully decentralized, with control over the blockchain not being in the hands of any single individual or entity.

Consortium blockchains differ to their public counterparts in that they are permissioned, thus, not just anyone with an internet connection could gain access to a consortium blockchain. These types of blockchains could also be described as being semi-decentralized. Control over a consortium blockchain is not granted to a single entity, but rather to a group of approved individuals. With a consortium blockchain, the consensus process is likely to differ to that of a public blockchain. Instead of anyone being able to partake in the procedure, consensus participants of a consortium blockchain are likely to be a group of pre-approved nodes on the network. The nodes may correspond to various countries, enterprises, or other entities. Thus, consortium blockchains possess the security features that are inherent in public blockchains, whilst also allowing for a greater degree of control over the network.

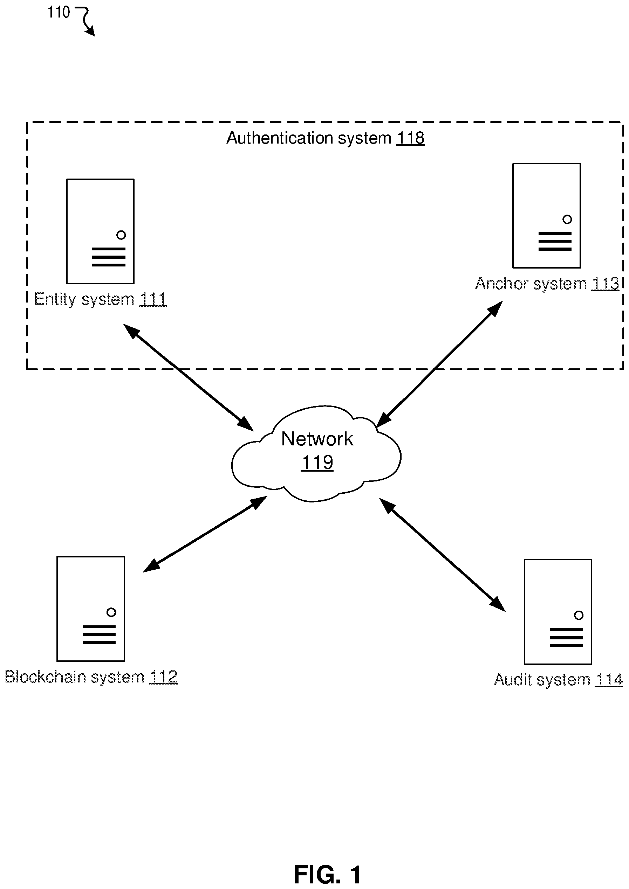

FIG. 1 shows an example of a system 110 for performing various disclosed steps and methods, in accordance with various embodiments. As shown, the system 110 may comprise an entity system 111, a blockchain system 112, an anchor system 113, and an audit system 114, each of which may correspond to one or more physical hardware devices or virtual devices coupled together via various types of communications represented by a network 119.

Each of the entity system 111, the blockchain system 112, the anchor system 113, and the audit system 114 may be implemented in one or more computing devices such as servers, computers, mobile phones, etc. For example, each of the systems may be implemented in a cluster of servers. The cluster of servers may employ load balancing.

Although the entity system 111, the blockchain system 112, the anchor system 113, and the audit system 114 are shown as single components in this figure, it should be appreciated that these systems can be implemented as single devices or multiple devices coupled together. That is, two or more of the systems in FIG. 1 may be integrated into a single system or implemented as separate systems. For example, the entity system 111 and the anchor system 113 may be integrated into an authentication system 118 comprising one or more computing devices. The authentication system 118 may be referred to as a blockchain-based authentication system. If integrated, the entity system 111 and the anchor system 113 may be implemented as various modules or similar components of the integrated system.

Each of the entity system 111, the blockchain system 112, the anchor system 113, and the audit system 114 may be installed with appropriate software (e.g., authentication application program interface) and/or hardware (e.g., wires, wireless connections) to access other devices of the system 110. Each of the entity system 111, the blockchain system 112, the anchor system 113, and the audit system 114 may include one or more processors and one or more memories coupled to the one or more processors. The memories may be non-transitory and computer-readable and be configured with instructions executable by one or more processors to cause the one or more processors to perform operations described herein.

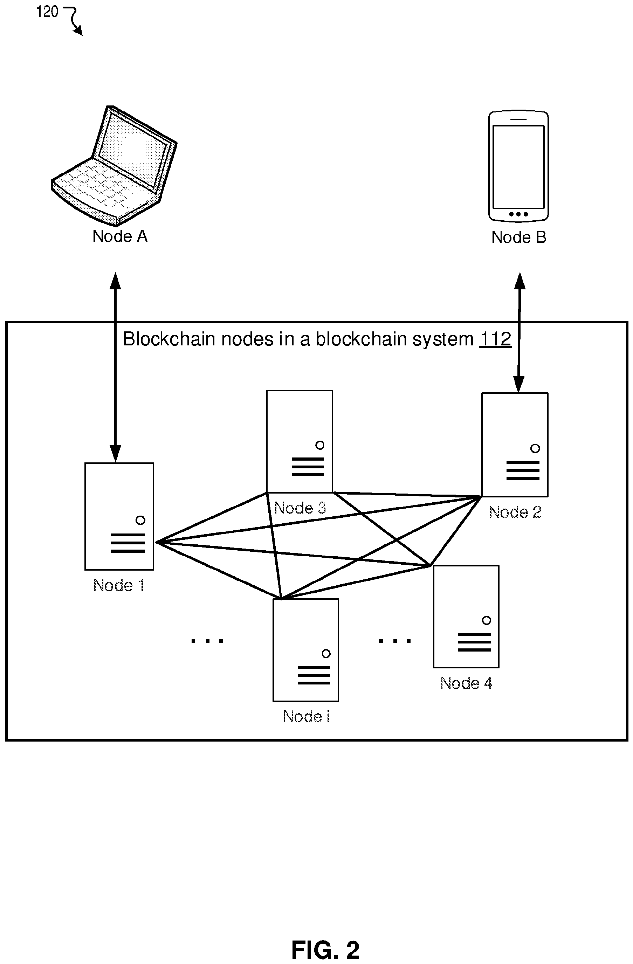

In general, the entity system 111, the blockchain system 112, the anchor system 113, and the audit system 114 may be able to communicate with one another through the network 119. For example, the entity system 111, the blockchain system 112, the anchor system 113, and the audit system 114 may be able to communicate with one another through one or more wired or wireless networks (e.g., the Internet) through which data can be communicated. Various aspects of the system components are described in further details below in reference to FIG. 2 to FIG. 7.

FIG. 2 shows an example of a blockchain network 120, in accordance with various embodiments. As shown, the blockchain network 120 may comprise the blockchain system 112 described above. The blockchain system 112 may comprise a plurality of blockchain nodes (e.g., node 1, node 2, node 3, node 4, node i, etc.). The blockchain nodes may form a network (e.g., peer-to-peer network) with one blockchain node communicating with another. The order and the number of the blockchain nodes as shown are merely examples and for the simplicity of illustration. The blockchain nodes may be implemented in servers, computers, etc. Each blockchain node may correspond to one or more physical hardware devices or virtual devices coupled together via various types of communication methods such as TCP/IP. Depending on the classifications, the blockchain nodes may comprise full nodes, Geth nodes, consensus nodes, etc.

In various embodiments, one or more nodes of the blockchain system 112 may interact with other systems and devices such as the entity system 111, the anchor system 113, and the audit system 114 described above. The interactions may involve transmission and/or reception of data for the purpose of, for instance, transactions, certificating, contracting, etc. In one example, node A (e.g., mobile phone, computer, etc.) may correspond to a device of the authentication system 118 and may transmit information to node 1 (or a plurality of nodes of the blockchain system 112) for storage in the blockchain. The storage process may be accomplished through a blockchain transaction. For instance, the information may be written into a blockchain contract (e.g., smart contract), and the blockchain transaction may be initiated by the node 1 (or one or more other nodes which have such privilege based on the blockchain consensus rules) to deploy the contract to the blockchain. Similar to other blockchain transactions, the blockchain transaction here may correspond to a transaction hash. The hash stands for hash value and may be a numeric output of subjecting data (e.g., identity information, transaction information associated with an executed transaction) to a hash function or algorithm. The blockchain may store the hash value of the blockchain transaction. Later, when the information needs to be retrieved (e.g., for verification), node A/node B (e.g., mobile phone, computer, etc.) may instruct node 1/node 2 (or a plurality of nodes of the blockchain system 112) to initiate another blockchain transaction to obtain the information from the blockchain. Another blockchain transaction may query the address to obtain the information. Node B may belong to the authentication system 118, the audit system 114, or another system (not shown) coupled to the blockchain system 112.

In the interaction with the blockchain system 112, node A and node B may be installed with appropriate blockchain software to initiate, forward, or access the blockchain transaction. Node A may access the blockchain through communication with node 1 or one or more other nodes of the blockchain, and node B may access the blockchain through communication with node 2 or one or more other nodes of the blockchain. Node A may submit the blockchain transaction to the blockchain through node 1 or similar nodes to request adding the blockchain transaction to the blockchain.

The blockchain may be maintained by a plurality of blockchain nodes each comprising or coupling to a memory. In some embodiments, the memory may store a pool database. The pool database may be accessible to the plurality of blockchain nodes in a distributed manner. For example, the pool database may be respectively stored in the memories of the blockchain nodes. The pool database may store a plurality of blockchain transactions submitted by the one or more user devices similar to node A.

In some embodiments, after receiving a blockchain transaction request of an unconfirmed blockchain transaction, the recipient blockchain node may perform some preliminary verification of the blockchain transaction. For example, referring to FIG. 2, node 1 may perform the preliminary verification after receiving a blockchain transaction from node A. Once verified, the blockchain transaction may be stored in the pool database of the recipient blockchain node (e.g., node 1), which may also forward the blockchain transaction to one or more other blockchain nodes (e.g., node 3, node 4). The one or more other blockchain nodes may repeat the process done by the recipient node. Once the blockchain transactions in the corresponding pool database reach a certain level (e.g., a threshold amount), the blockchain nodes may each verify the batch of blockchain transactions in the corresponding pool database according to consensus rules or other rules. If the blockchain transaction involves a blockchain contract (e.g., smart contract), the blockchain node may execute the blockchain contract locally. A blockchain contract is a computer protocol intended to digitally facilitate, verify, or enforce the negotiation or performance of a contract. Blockchain contracts allow the performance of credible blockchain transactions without third parties. An example of a blockchain transaction may encode data in contract code for data storage (by contract deployment) and retrieval (by accessing or executing contract). The blockchain contract may include user-written contract code, such as the hash value of identity information, blockchain transaction information associated with an executed blockchain transaction, etc. A certain blockchain node that successfully verifies its batch of blockchain transactions in accordance with consensus rules may pack the blockchain transactions to add to its local copy of the blockchain and spread the results to other blockchain nodes. The certain blockchain node may be a blockchain node that has first successfully completed the verification, that has obtained the verification privilege, or that has been determined based on another consensus rule, etc. Then, the other blockchain nodes may execute the blockchain transactions locally, verify the execution results with one another (e.g., by performing hash calculation), and synchronize their copies of the blockchain with that of the certain blockchain node. By updating their local copies of the blockchain, the other blockchain nodes may similarly write such information in the blockchain transaction into respective local memories. Thus, the blockchain contract is deployed. A deployed contract can be later accessed through its corresponding address on blockchain for execution. For example, the data stored in the contract can be retrieved. If the verification fails at some point, the blockchain transaction is rejected. Notwithstanding the above, other types of blockchain systems and associated consensus rules may be applied to the disclosed blockchain system.

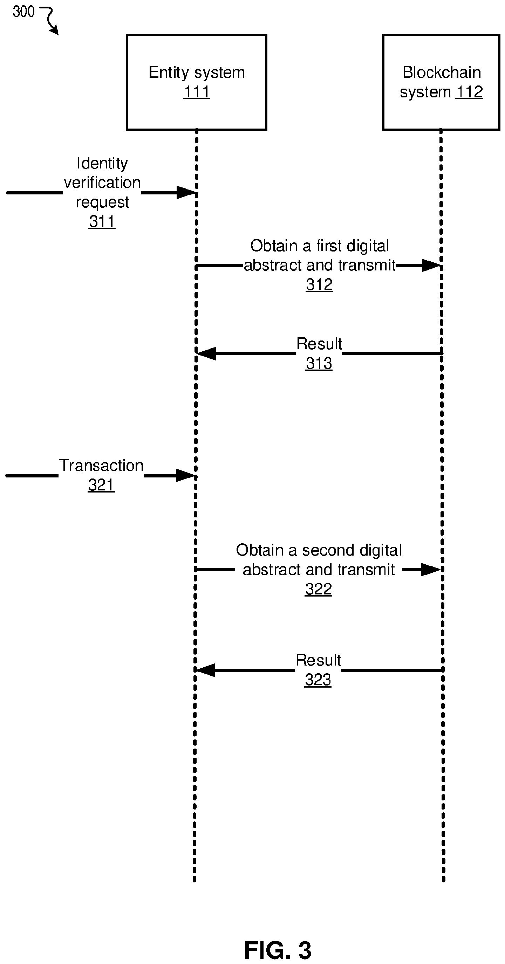

FIG. 3 illustrates an example of a method 300 for storing data to blockchain, in accordance with various embodiments. The method 300 may be implemented by one or more components (e.g., the entity system 111, the blockchain system 112) of the system 110 of FIG. 1. As described earlier, the entity system 111 may be a part of the authentication system 118 comprising one or more computing devices. The entity system 111 may be a financial system, such as a banking system. The operations presented below are intended to be illustrative. Depending on the implementation, the method 300 may include additional, fewer, or alternative steps performed in various orders or in parallel.

In some embodiments, at step 311, an entity may initiate an identity verification request (e.g., login) through the entity system 111. The entity may be associated with an individual, a corporation or enterprise, an organization, etc. For example, a person may try to log into the entity system 111 or a similar system coupled to the entity system 111 (e.g., an online banking system operated by a bank and implemented on node A) by inputting certain identity information of the login user (e.g., credential information such as account and password, authorization level of the login user, etc.) for verification.

At step 312, the entity system 111 may verify the identity information and obtain a first digital abstract of the identity information for the identity verification request. The identity information for the identity verification request may comprise any information related to, for example but not limited to, one or more of the following: the biograph information of the login user (e.g., name, gender, address, identification, contact number, etc.), login timestamp and location, login device, whether the login succeeded or failed, etc. The first digital abstract of the identity information may be a hash (e.g., SHA-256 hash) of the identity information. The entity system 111 may perform a hash process on the identity information to obtain the first digital abstract. For example, the first digital abstract may comprise a hash value obtained by subjecting the identity information to a hash algorithm. The entity system 111 may transmit the first digital abstract to the blockchain system 112 to store in a blockchain maintained by the blockchain system 112. By the first blockchain transaction, the first digital abstract is stored to the blockchain system 112. The blockchain may store the first digital abstract (e.g., hash value of the identity information), but not store details (e.g., plaintext) of the identity information to ensure privacy, since blockchain-stored data is visible to various blockchain nodes.

In some embodiments, the entity system 111 may include one or more lightweight nodes (e.g., node A, node B). The entity system 111 may initiate the first blockchain transaction through a node of the blockchain system 112 (e.g. node 1) coupled to the lightweight node(s). For example, the first digital abstract may be written into a blockchain contract (e.g., smart contract), and the first blockchain transaction may be initiated to deploy the contract to the blockchain. By the deployment, the contract is accessible from the blockchain for execution or other operations. The first blockchain transaction in this case may correspond to a first blockchain transaction identification (e.g., first transaction hash). For example, the first blockchain transaction identification can be a hash value of the first blockchain transaction. The blockchain system 112 may also store the first blockchain transaction identification. Thus, the first blockchain transaction identification and the first digital abstract are anchored. The anchoring relationship may be stored in the anchor system 113. By querying the first blockchain transaction identification, the blockchain-stored first digital abstract can be retrieved. For example, when the first blockchain transaction identification is sent to the blockchain system 112, the blockchain system 112 may execute the blockchain contract to retrieve the first digital abstract. There are many other suitable ways to store and retrieve the digital abstract on the blockchain system 112. A person having ordinary skill in the art should appreciate that the embodiments of this specification are not limited to the above example.

At step 313, if the above steps are executed successfully, the blockchain system 112 may return a result indicating that the first digital abstract is successfully stored to the blockchain. For example, the entity system 111 may obtain a notification that the login is successful. The blockchain system 112 may also return the first blockchain transaction identification associated with storing the first digital abstract of the identity information to the blockchain.

At step 321, the entity may initiate a transaction request (e.g., a financial transaction or another activity) through the entity system 111.

At step 322, in response to the login being successful, the entity system 111 may execute a transaction according to the transaction request to obtain a transaction result. Here, transaction can be any type of activities, such as transferring fund, withdrawing fund, changing account information, requesting information, requesting fund, approving or rejecting a transaction, etc. The transaction is not limited by the examples described herein. In this specification, transaction information is used to refer to information related to the transaction. For example, the transaction information can include one or more of the following, the transaction request, the transaction result, account user information such as user identification and authorization level, the URLs (uniform resource locators) that the user or the entity system 111 accessed while performing the transaction, variables or coefficients related to performing the transaction, account balance prior to and/or after the transaction, account activity log, etc. A person having ordinary skill in the art should appreciate that the transaction information is not limited to the above-listed examples.

In the following examples, the term operation information is used. In some embodiments, the operation information can include the transaction information. In some other embodiments, the operation information can include the transaction information plus the information associated with the login steps 311 and 313. In some embodiments, the information associated with the login steps 311 and 313 may include one or more of: the first digital abstract, identity information of the entity (the user), or the first blockchain transaction identification. For example, in one scenario, the operation information includes the transaction information plus the first digital abstract. What to include in the operation information can be a design choice of the person who implements the disclosed embodiments.

The entity system 111 may further obtain (e.g., generate) a second digital abstract of the operation information. The second digital abstract of the operation information may be a hash (e.g., SHA-256 hash) of the operation information. The entity system 111 may perform a hash process on the operation information to obtain the second digital abstract. For example, the second digital abstract may comprise a hash value obtained by subjecting the operation information to a hash algorithm. The entity system 111 may transmit the second digital abstract to the blockchain system 112 to store in the blockchain maintained by the blockchain system 112.

In various embodiments, the entity system 111 may initiate a second blockchain transaction to store the second digital abstract in the blockchain through a node of the blockchain system 112. For example, the second digital abstract may be written into a blockchain contract (e.g., smart contract), and the second blockchain transaction may be initiated by the node or another node to deploy the contract to the blockchain. The second blockchain transaction in this case may correspond to a second blockchain transaction identification (e.g., second transaction hash), which is also associated with the second digital abstract. The blockchain may store the second digital abstract (e.g., hash value of the operation information), but not store details (e.g., plaintext) of the transaction information to ensure privacy, since blockchain-stored data is visible to various blockchain nodes. The blockchain may also store the second blockchain transaction identification. Thus, the second blockchain transaction identification and the second digital abstract are anchored. The anchoring relationship may be stored in the anchor system 113. By querying the second blockchain transaction identification, the blockchain-stored second digital abstract can be retrieved. Other alternative methods to smart contract may be employed to achieve storage of the second digital abstract of the operation information in the blockchain.

At step 323, if the above steps are executed successfully, the blockchain system 112 may return a result to the entity system 111 indicating that the second digital abstract is successfully stored to the blockchain. The blockchain system 112 may also return the second blockchain transaction identification associated with storing the second digital abstract of the operation information to the blockchain. The second blockchain transaction identification or similar transaction identifications may be stored in the entity system 111 and/or another system (e.g., the anchor system 113). Thus, the entity system 111 may obtain the transaction identification associated with storing the digital abstract of the operation information to the blockchain.

Alternatively, step 311 may be combined with step 321. That is, the identification verification and transaction may be requested at the same time. Accordingly, steps 312 may be combined with step 322, and step 313 may be combined with step 323.

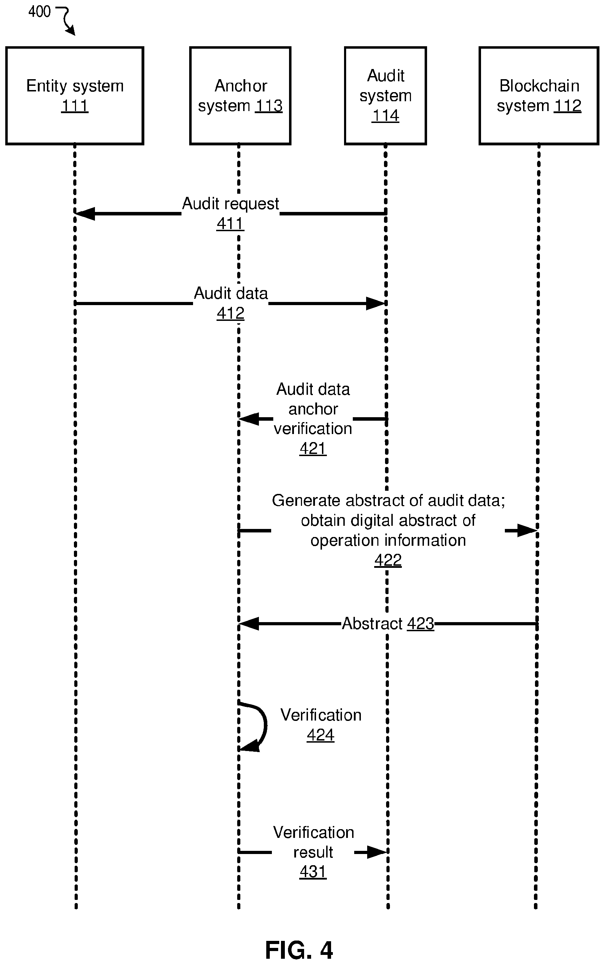

FIG. 4 illustrates an example of a method 400 for data anchoring and verification, in accordance with various embodiments. The method 400 may be implemented by one or more components (e.g., the entity system 111, the blockchain system 112, the anchor system 113, the audit system 114) of the system 110 of FIG. 1. As described earlier, though shown as separate systems, the entity system 111 and the anchor system 113 may be integrated into the authentication system 118 comprising one or more computing devices. The operations presented below are intended to be illustrative. Depending on the implementation, the method 400 may include additional, fewer, or alternative steps performed in various orders or in parallel.

In some embodiments, at step 411, the audit system 114 may initiate an audit request with the entity system 111. For example, an audit authority's system may initiate a communication with the entity system 111 to request the entity to provide data for audit. The specification generally refers the data provided by the entity system 111 for auditing as audit data. The requested audit data may be one or more complete sets of operation information for one or more transactions, or may be part of the operation information, for example, account activity log, account user information such as user identification and authorization level, etc. The audit data is supposed to be the same as the operation information if the audit data provided by the entity system 111 is truthful.

At step 412, the entity system 111 may transmit the requested audit data to the audit system 114. The audit system 114 may therefore obtain the audit data for authentication against the operation information. For example, the audit data may comprise the log of one or more transactions, which allegedly correspond to one or more executed transactions. The following steps may be performed to authenticate if the audit data truly corresponds to the historical transactions. Thus, audit data manipulation can be prevented.

At step 421, the audit system 114 may initiate verification of the audit data through the anchor system 113. The audit system 114 may forward the audit data to the anchor system 113. In this specification, anchor or anchoring may mean associating or otherwise establishing an association. The anchor system 113 stores the association relationships. For example, the anchor system 113 stores the association relationship of the blockchain transaction identifications and digital abstracts. The anchor system 113 may have obtained the association relationships from the entity system 111.

At step 422, in response, the anchor system 113 may obtain a blockchain transaction identification based on the audit data. For example, the audit data may include an identification of the executed transaction to be audited. The executed transaction may be associated with a blockchain transaction identification. The blockchain transaction can be the blockchain transactions described in conjunction with FIG. 3 above. As described above, the anchor system 113 may have stored blockchain transaction identifications corresponding to blockchain transactions that store corresponding digital abstracts for executed transactions to the blockchain. The anchor system 113 may obtain the blockchain transaction identification directly from the audit system 114 or from the entity system 111. This blockchain transaction identification obtained in step 422 can be referred to as a third blockchain transaction identification (e.g., third transaction hash). Similar to the blockchain transaction identifications described above in connection with FIG. 3, the third blockchain transaction identification is associated with a digital abstract on the blockchain system 112. The digital abstract is the digital abstract of the operation information to be audited that is previously stored in the blockchain system 112. The third blockchain transaction identification can be used to identify and obtain the digital abstract from the blockchain system 112. In this step, the anchor system 113 can send the third blockchain transaction identification to the blockchain system 112 for identifying and obtaining the corresponding digital abstract.

The anchor system 113 may also generate a digital abstract of the audit data. This digital abstract can be referred to as a third digital abstract.

At step 423, the blockchain system 112 may transmit the blockchain-stored copy of digital abstract associated with the third blockchain transaction identification to the anchor system 113.

At step 424, the anchor system 113 may verify if the blockchain-stored copy of digital abstract associated with the third blockchain transaction identification is consistent with the generated third digital abstract.

At step 431, the anchor system 113 may return a verification result to the audit system 114. If the blockchain-stored copy of digital abstract associated with the third blockchain transaction identification is consistent with the generated third digital abstract, the verification result may indicate that the audit data is authentic. Otherwise, the verification result may indicate that the audit data is unauthentic.

As discussed above, in some embodiments, the anchor system 113 may be integrated with the audit system 114. In some other embodiments, some or all of the steps may be performed by the audit system 114, instead of the anchor system 113. For example, the audit system 114 may obtain the third blockchain transaction identification from the entity system 111 or the anchor system 113. Alternatively, the audit system 114 may obtain the third blockchain transaction identification from its own database, which may store a corresponding relationship between executed transactions and blockchain transaction identifications. The audit system 114 may retrieve the digital abstract of the operation information associated with the executed transaction based on the blockchain transaction identification. The audit system 114 may also generate the third digital abstract of the audit data. Then, the audit system 114 may compare the third digital abstract against the digital abstract retrieved from blockchain to verify the audit data.

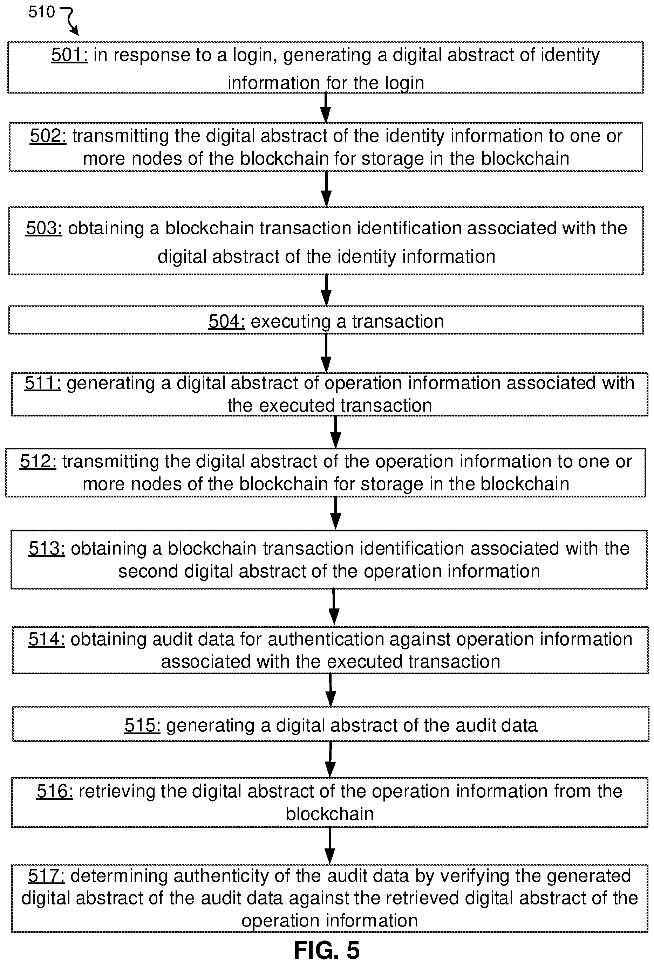

FIG. 5 illustrates a flow chart of an example of a method 510 for implementing blockchain-based authentication, in accordance with various embodiments. The method 510 may be implemented by one or more components (e.g., the authentication system 118) of the system 110 of FIG. 1. For example, steps 514 to 517 may be performed by the anchor system 113 of the authentication system 118. For example, steps 501 to 504 and 511 to 513 may be performed by a combination of the entity system 111 and the anchor system 113 of the authentication system 118. The method 510 may be implemented by a system comprising various hardware machine and/or software. For example, the authentication system 118 may be implemented by one or more systems or devices (e.g., computers, servers). The system implementing the method 510 may comprise one or more processors and one or more non-transitory computer-readable storage media (e.g., one or more memories) coupled to the one or more processors and configured with instructions executable by the one or more processors to cause the system (e.g., the processor) to perform the method 510. The operations presented below are intended to be illustrative. Depending on the implementation, the method 510 may include additional, fewer, or alternative steps performed in various orders or in parallel. An example of an implementation of the method 510 is described above with reference to FIG. 3 to FIG. 4.

In some embodiments, some optional steps may be executed before step 514. Optional step 501 includes: in response to a login from a user, generating a digital abstract (e.g., first digital abstract) of identity information for the login. Optional step 502 includes: transmitting the digital abstract (e.g., the first digital abstract) of the identity information to one or more nodes of the blockchain for storage in the blockchain. Optional step 503 includes: obtaining a blockchain transaction identification (e.g., the first blockchain transaction identification) associated with the first digital abstract of the identity information.

Optional step 504 includes: executing a transaction (e.g., a financial transaction) as requested by the user. Optional step 511 includes generating a digital abstract (e.g., second digital abstract) of operation information associated with the executed transaction. In some embodiments, the second digital abstract of the operation information comprises a hash value of the operation information. Hash or hash value of certain data may mean hash value (e.g., a numeric result of subjecting the data to a hash algorithm). For example, generating the digital abstract of certain data (e.g., the operation information) may include subjecting the data to a hash algorithm to obtain a numeric result. The contents of the operation information may be configured per audit requirement. The operation information may include transaction information of the transaction and one or more of: the digital abstract of the identity information, the identity information, and the blockchain transaction identification associated with the digital abstract of the identity information (e.g., the first blockchain transaction identification).

In some embodiments, the transaction information of the transaction may comprise one or more URLs for executing the transaction. The transaction information of the transaction may comprise one or more parameters (e.g., account ID) for invoking the one or more URLs and one or more returned results (e.g., end account balances) from invoking the one or more URLs. For example, the operation information may include transaction information associated with the executed transaction and the first digital abstract. In a specific example, the transaction information in the operation information may include the request to execute the transaction, which includes a URL that is invoked for performing the transaction. For another example, the operation information may also include identification information of the user requesting or authorizing the transaction. For another example, the operation information may also include a result of executing the operation (e.g., transfers amounts or balances). In some embodiments, the identification information comprises an authorization level of the user requesting or authorizing the execution of the transaction, which can be used to verify if the user has a high enough authorization level to conduct or approve the transaction.

Optional step 512 includes transmitting the digital abstract (e.g., second digital abstract) of the operation information to one or more nodes of the blockchain for storage in the blockchain. In some embodiments, transmitting the digital abstract of the operation information to one or more nodes of the blockchain for storage in the blockchain comprises: writing the second digital abstract of the operation information and a cryptographic process (e.g., SHA-256 hash) used for generating the digital abstract of the operation information into a blockchain contract; and causing the one or more nodes to initiate a blockchain transaction to deploy the blockchain contact. Further details may be referred to step 322 described above.

Optional step 513 includes obtaining a blockchain transaction identification (e.g., the second blockchain transaction identification) associated with the second digital abstract of the operation information. In some embodiments, the transaction identification comprises a transaction hash value of the blockchain transaction deploying the blockchain contact. Examples of transaction hash can be referred to the first blockchain transaction identification and the second blockchain transaction identification described above.

Step 514 includes obtaining audit data for authentication against operation information associated with an executed transaction (e.g., the operation information associated with the executed transaction in steps 504 to 513). Here, the specification refers to "an executed transaction." A person having ordinary skill in the art should appreciate that in the specification, it can include a plurality of executed transactions or a part of an executed transaction. The audit data may be provided by the entity or obtained from elsewhere for audit. The audit data may comprise any type of record data that needs to be audited or otherwise verified. By the following steps, the authenticity of the audit data may be verified based on the consistency with the operation information. Further details may be referred to steps 411, 412, and 421 described above.

Step 515 includes generating a digital abstract (e.g., the third digital abstract) of the audit data. In some embodiments, generating the third digital abstract of the audit data comprises generating the third digital abstract of the audit data based on a cryptographic process (e.g., SHA-256 hash) used for generating the second digital abstract of the operation information.

Step 516 includes retrieving a digital abstract of the operation information from a blockchain. Here, a digital abstract that is supposed to correspond to the audit data from the blockchain may be retrieved. In some embodiments, retrieving the digital abstract from the blockchain comprises retrieving the digital abstract according to a blockchain transaction identification associated with the transaction to be audited. In some embodiments, the audit system may obtain the blockchain transaction identification based on information on the to-be-audited transaction in the audit data. In scenarios that the audit data is authentic, the blockchain transaction identification should be the same as the second blockchain transaction identification associated with the second digital abstract in step 513. Further details may be referred to steps 422 and 423 described above.

Step 517 includes determining authenticity of the audit data by verifying the generated digital abstract (e.g., the third digital abstract) of the audit data against the retrieved digital abstract of the operation information. Further details may be referred to step 424 described above. In some embodiments, step 517 comprises: in response to determining that the generated third digital abstract of the audit data is consistent with the retrieved digital abstract, determining that the audit data is authentic; and in response to determining that the generated third digital abstract of the audit data is inconsistent with the retrieved digital abstract, determining that the audit data is unauthentic.

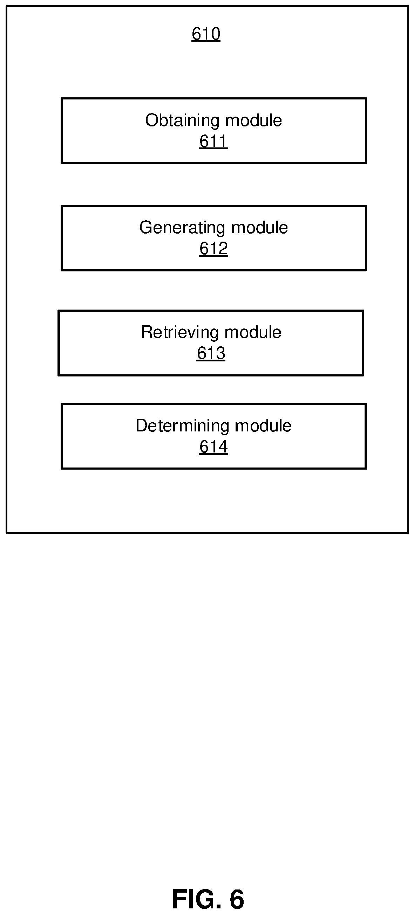

FIG. 6 illustrates a block diagram of an example of a computer system 610 for implementing blockchain-based authentication, in accordance with various embodiments. The system 610 may be an example of an implementation of one or more components (e.g., the authentication system 118) of the system 110 of FIG. 1. The method 510 may be implemented by the computer system 610. The computer system 610 may comprise one or more processors and one or more non-transitory computer-readable storage media (e.g., one or more memories) coupled to the one or more processors and configured with instructions executable by the one or more processors to cause the system or device (e.g., the processor) to perform the method 510. The computer system 610 may comprise various units/modules corresponding to the instructions (e.g., software instructions). In some embodiments, the computer system 610 may be referred to as an authentication apparatus. The authentication apparatus may comprise an obtaining module 611 for obtaining audit data for authentication against operation information associated with an executed transaction; a generating module 612 for generating a digital abstract of the audit data; a retrieving module 613 for retrieving a digital abstract of the operation information from a blockchain; and a determining module 614 for determining authenticity of the audit data by verifying the generated digital abstract of the audit data against the retrieved digital abstract of the operation information.

As shown, by generating a digital abstract of the operation information associated with an executed transaction and storing the digital abstract to the blockchain, a representation of the operation information can be securely maintained and accessible for verification. The digital abstract is stored to blockchain records data for future audit. Tempering of the stored data can be thwarted based on the blockchain consensus rules including hashing. The digital abstract representation of the operation information may also hide away plaintext information to protect privacy. Through querying blockchain transaction identification, the blockchain-stored digital abstract can be retrieved from the blockchain for verification. Thus, the originality and authenticity of the audit data can be ensured, which lowers the chance for audit fraud.

The techniques described herein are implemented by one or more special-purpose computing devices. The special-purpose computing devices may be desktop computer systems, server computer systems, portable computer systems, handheld devices, networking devices or any other device or combination of devices that incorporate hard-wired and/or program logic to implement the techniques. The special-purpose computing devices may be implemented as personal computers, laptops, cellular phones, camera phones, smart phones, personal digital assistants, media players, navigation devices, email devices, game consoles, tablet computers, wearable devices, or a combination thereof. Computing device(s) are generally controlled and coordinated by operating system software. Conventional operating systems control and schedule computer processes for execution, perform memory management, provide file system, networking, I/O services, and provide a user interface functionality, such as a graphical user interface ("GUI"), among other things. The various systems, apparatuses, storage media, modules, and units described herein may be implemented in the special-purpose computing devices, or one or more computing chips of the one or more special-purpose computing devices. In some embodiments, the instructions described herein may be implemented in a virtual machine on the special-purpose computing device. When executed, the instructions may cause the special-purpose computing device to perform various methods described herein. The virtual machine may include a software, hardware, or a combination thereof. For example, the virtual machine may include an Ethereum Virtual Machine (EVM) software that provides the runtime environment for smart contracts in Ethereum.

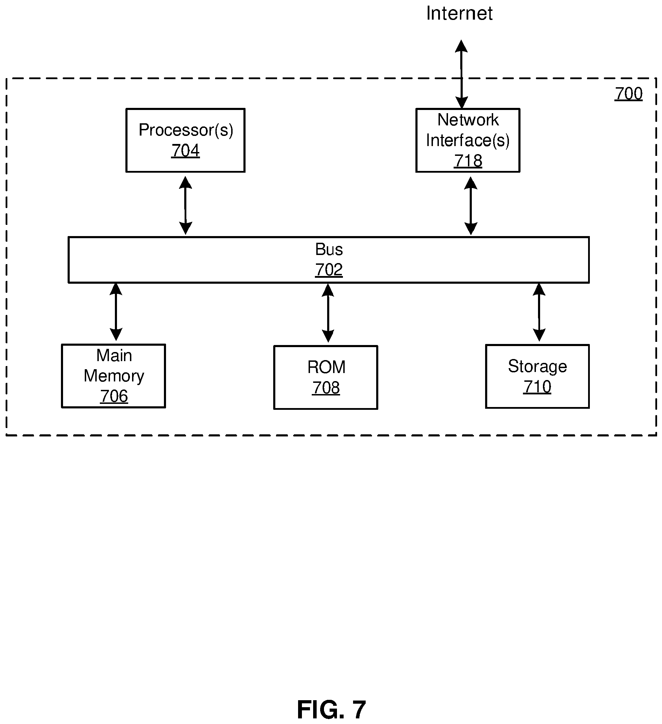

FIG. 7 is a block diagram that illustrates a computer system 700 upon which any of the embodiments described herein may be implemented. The system 700 may be implemented in any of the nodes described herein and configured to perform corresponding steps for implementing blockchain contract. The computer system 700 includes a bus 702 or other communication mechanism for communicating information, one or more hardware processor(s) 704 coupled with bus 702 for processing information. Hardware processor(s) 704 may be, for example, one or more general purpose microprocessors.

The computer system 700 also includes a main memory 706, such as a random access memory (RAM), cache and/or other dynamic storage devices, coupled to bus 702 for storing information and instructions executable by processor(s) 704. Main memory 706 also may be used for storing temporary variables or other intermediate information during execution of instructions executable by processor(s) 704. Such instructions, when stored in storage media accessible to processor(s) 704, render computer system 700 into a special-purpose machine that is customized to perform the operations specified in the instructions. The computer system 700 further includes a read only memory (ROM) 708 or other static storage device coupled to bus 702 for storing static information and instructions for processor(s) 704. A storage device 710, such as a magnetic disk, optical disk, or USB thumb drive (Flash drive), etc., is provided and coupled to bus 702 for storing information and instructions.

The computer system 700 may implement the techniques described herein using customized hard-wired logic, one or more ASICs or FPGAs, firmware and/or program logic which in combination with the computer system causes or programs computer system 700 to be a special-purpose machine. According to one embodiment, the operations, methods, and processes described herein are performed by computer system 700 in response to processor(s) 704 executing one or more sequences of one or more instructions contained in main memory 706. Such instructions may be read into main memory 706 from another storage medium, such as storage device 710. Execution of the sequences of instructions contained in main memory 706 causes processor(s) 704 to perform the process steps described herein. In alternative embodiments, hard-wired circuitry may be used in place of or in combination with software instructions.

The main memory 706, the ROM 708, and/or the storage 710 may include non-transitory storage media. The term "non-transitory media," and similar terms, as used herein refers to media that store data and/or instructions that cause a machine to operate in a specific fashion, the media excludes transitory signals. Such non-transitory media may comprise non-volatile media and/or volatile media. Non-volatile media includes, for example, optical or magnetic disks, such as storage device 710. Volatile media includes dynamic memory, such as main memory 706. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

The computer system 700 also includes a network interface 718 coupled to bus 702. Network interface 718 provides a two-way data communication coupling to one or more network links that are connected to one or more local networks. For example, network interface 718 may be an integrated services digital network (ISDN) card, cable modem, satellite modem, or a modem to provide a data communication connection to a corresponding type of telephone line. As another example, network interface 718 may be a local area network (LAN) card to provide a data communication connection to a compatible LAN (or WAN component to communicated with a WAN). Wireless links may also be implemented. In any such implementation, network interface 718 sends and receives electrical, electromagnetic or optical signals that carry digital data streams representing various types of information.

The computer system 700 can send messages and receive data, including program code, through the network(s), network link and network interface 718. In the Internet example, a server might transmit a requested code for an application program through the Internet, the ISP, the local network and the network interface 718.

The received code may be executed by processor(s) 704 as it is received, and/or stored in storage device 710, or other non-volatile storage for later execution.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and sub-combinations are intended to fall within the scope of this specification. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The examples of blocks or states may be performed in serial, in parallel, or in some other manner. Blocks or states may be added to or removed from the disclosed embodiments. The examples of systems and components described herein may be configured differently than described. For example, elements may be added to, removed from, or rearranged compared to the disclosed embodiments.

The various operations of methods described herein may be performed, at least partially, by one or more processors that are temporarily configured (e.g., by software) or permanently configured to perform the relevant operations. Whether temporarily or permanently configured, such processors may constitute processor-implemented engines that operate to perform one or more operations or functions described herein.

Similarly, the methods described herein may be at least partially processor-implemented, with a particular processor or processors being an example of hardware. For example, at least some of the operations of a method may be performed by one or more processors or processor-implemented engines. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some embodiments, the processors or processor-implemented engines may be located in a single geographic location (e.g., within a home environment, an office environment, or a server farm). In other embodiments, the processors or processor-implemented engines may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in configurations may be implemented as a combined structure or component. Similarly, structures and functionality presented as a single component may be implemented as separate components. These and other variations, modifications, additions, and improvements fall within the scope of the subject matter herein.

Although an overview of the subject matter has been described with reference to specific embodiments, various modifications and changes may be made to these embodiments without departing from the broader scope of embodiments of the this specification. The Detailed Description should not to be taken in a limiting sense, and the scope of various embodiments is defined only by the appended claims, along with the full range of equivalents to which such claims are entitled. Furthermore, related terms (such as "first," "second," "third," etc.) used herein do not denote any order, height, or importance, but rather are used to distinguish one element from another element. Furthermore, the terms "a," "an," and "plurality" do not denote a limitation of quantity herein, but rather denote the presence of at least one of the articles mentioned.

## Claims

1. A computer-implemented authentication method, comprising:
in response to a login, generating (501) a digital abstract of identity information for the login, wherein the identity information comprises an identity and an authorization level of a user requesting or authorizing execution of a transaction;
transmitting (502) the digital abstract of the identity information to one or more nodes of the blockchain for storage in the blockchain;
obtaining (503), from the blockchain, a blockchain transaction identification associated with the digital abstract of the identity information;
in response to the login being successful, executing (504) the transaction;
generating (511) a digital abstract of operation information of the executed transaction, wherein the operation information includes transaction information of the transaction and the blockchain transaction identification associated with the digital abstract of the identity information;
transmitting (512) the digital abstract of the operation information to one or more nodes of the blockchain for storage in the blockchain;
obtaining (513) a blockchain transaction identification associated with the digital abstract of the operation information;
obtaining (514), from a computing device, audit data for authentication against the operation information of the executed transaction;
generating (515) a digital abstract of the audit data;
retrieving (516) the digital abstract of the operation information from the blockchain according to the blockchain transaction identification corresponding to the digital abstract of the operation information; and
determining (517) authenticity of the audit data by verifying the generated digital abstract of the audit data against the retrieved digital abstract of the operation information.

2. The method of claim 1, wherein determining the authenticity of the audit data by verifying the generated digital abstract of the audit data against the retrieved digital abstract of the operation information comprises:
in response to determining that the generated digital abstract of the audit data is consistent with the retrieved digital abstract of the operation information, determining that the audit data is authentic; or
in response to determining that the generated digital abstract of the audit data is inconsistent with the retrieved digital abstract of the operation information, determining that the audit data is unauthentic.

3. The method of any preceding claim, wherein the operation information includes one or more of: the digital abstract of the identity information and the identity information.

4. The method of claim 1, wherein:
the audit data comprises an identification of the executed transaction; and
before retrieving the digital abstract of the operation information from the blockchain according to the blockchain transaction identification corresponding to the digital abstract of the operation information, the method further comprises: from a storage system outside the blockchain, obtaining, based on the identification of the executed transaction, the blockchain transaction identification corresponding to the digital abstract of the operation information.

5. The method of any preceding claim, wherein transmitting the digital abstract of the operation information to one or more nodes of the blockchain for storage in the blockchain comprises:
writing the digital abstract of the operation information and a cryptographic process used for generating the digital abstract of the operation information into a blockchain contract; and
causing the one or more nodes to initiate a blockchain transaction to deploy the blockchain contact.

6. The method of claim 5, wherein:
generating the digital abstract of the audit data comprises generating the digital abstract of the audit data based on the cryptographic process used for generating the digital abstract of the operation information.

7. The method of any preceding claim, wherein:
the transaction information of the transaction comprises one or more URLs, uniform resource locators, for executing the transaction.

8. The method of claim 7, wherein:
the transaction information of the transaction comprises one or more parameters for invoking the one or more URLs and one or more returned results from invoking the one or more URLs.

9. The method of any preceding claim, wherein the digital abstract of the operation information comprises a hash value of the operation information.

10. The method of any preceding claim, wherein:
the blockchain is a consortium blockchain.

11. An authentication system (118), comprising:
one or more processors; and
one or more computer-readable memories coupled to the one or more processors and having instructions stored thereon that are executable by the one or more processors to perform the method of any of claims 1 to 10.

12. An authentication apparatus comprising a plurality of modules for performing the method of any of claims 1 to 10.

## Patentansprüche

1. Computerimplementiertes Authentifizierungsverfahren, umfassend:
als Reaktion auf eine Anmeldung, Erzeugen (501) einer digitalen Zusammenfassung von Identitätsinformationen für die Anmeldung, wobei die Identitätsinformationen eine Identität und eine Autorisationsebene eines Benutzers umfassen, welcher die Ausführung einer Transaktion anfragt oder autorisiert;
Übertragen (502) der digitalen Zusammenfassung der Identitätsinformationen an einen oder mehrere Knoten der Blockchain zur Speicherung in der Blockchain;
Erhalten (503), von der Blockchain einer Blockchain-Transaktionskennung, welche der digitalen Zusammenfassung der Identitätsinformation zugeordnet ist;
als Reaktion auf eine erfolgreiche Anmeldung, Ausführen (504) der Transaktion;
Erzeugen (511) einer digitalen Zusammenfassung von Operationsinformationen der ausgeführten Transaktion, wobei die Operationsinformationen Transaktionsinformationen der Transaktion und die Blockchain-Transaktionskennung umfassen, welche der digitalen Zusammenfassung der Identitätsinformationen zugeordnet ist;
Übertragen (512) der digitalen Zusammenfassung der Operationsinformationen an einen oder mehrere Knoten der Blockchain zur Speicherung in der Blockchain;
Erhalten (513) einer Blockchain-Transaktionskennung, die der digitalen Zusammenfassung der Operationsinformationen zugeordnet ist;
Erhalten (514), von einer Computervorrichtung, von Auditdaten für die Authentifizierung gegenüber der Operationsinformationen der ausgeführten Transaktion;
Erzeugen (515) einer digitalen Zusammenfassung der Auditdaten;
Abrufen (516) der digitalen Zusammenfassung der Operationsinformationen von der Blockchain gemäß der Blockchain-Transaktionskennung, die der digitalen Zusammenfassung der Operationsinformationen entspricht; und
Bestimmen (517) der Authentizität der Auditdaten durch Überprüfen der erzeugten digitalen Zusammenfassung der Auditdaten gegenüber der abgerufenen digitalen Zusammenfassung der Operationsinformationen.

2. Verfahren nach Anspruch 1, wobei das Bestimmen der Authentizität der Auditdaten durch Überprüfen der erzeugten digitalen Zusammenfassung der Auditdaten gegenüber der abgerufenen digitalen Zusammenfassung der Operationsinformationen umfasst:
als Reaktion auf das Bestimmen, dass die erzeugte digitale Zusammenfassung der Auditdaten mit der abgerufenen digitalen Zusammenfassung der Operationsinformationen übereinstimmt, Bestimmen dass die Auditdaten authentisch sind; oder
als Reaktion auf das Bestimmen, dass die erzeugte digitale Zusammenfassung der Auditdaten mit der abgerufenen digitalen Zusammenfassung der Operationsinformationen nicht übereinstimmt, Bestimmen dass die Auditdaten nicht authentisch sind.

3. Verfahren nach einem der vorhergehenden Ansprüche, wobei die Operationsinformationen eines oder mehr von Folgendem umfassen: die digitale Zusammenfassung der Identitätsinformationen unddie Identitätsinformationen.

4. Verfahren nach Anspruch 1, wobei:
die Auditdaten eine Identifikation der ausgeführten Transaktion umfassen; und
vor dem Abrufen der digitalen Zusammenfassung der Operationsinformationen von der Blockchain gemäß der Blockchain-Transaktionskennung, die der digitalen Zusammenfassung der Operationsinformationen entspricht, das Verfahren ferner umfasst: Erhalten, von einem Speichersystem außerhalb der Blockchain, basierend auf der Identifikation der ausgeführten Transaktion, der Blockchain-Transaktionskennung, die der digitalen Zusammenfassung der Operationsinformationen entspricht.

5. Verfahren nach einem der vorhergehenden Ansprüche, wobei das Übertragen der digitalen Zusammenfassung der Operationsinformationen an einen oder mehreren Knoten der Blockchain zum Speichern in der Blockchain umfasst:
Schreiben der digitalen Zusammenfassung der Operationsinformationen und eines kryptographischen Prozesses, welcher verwendet wird, um die digitale Zusammenfassung der Operationsinformationen in einem Blockchain-Vertrag zu erzeugen; und
Veranlassen, dass der eine oder die mehreren Knoten eine Blockchain-Transaktion initiieren, um den Blockchain-Vertrag einzusetzen.

6. Verfahren nach Anspruch 5, wobei:
das Erzeugen der digitalen Zusammenfassung der Auditdaten das Erzeugen der digitalen Zusammenfassung der Auditdaten umfasst, basierend auf dem kryptographischen Prozess, welcher verwendet wird, um die digitale Zusammenfassung der Operationsinformationen zu erzeugen.

7. Verfahren nach einem der vorhergehenden Ansprüche, wobei:
die Transaktionsinformationen der Transaktion eine oder mehrere URL, uniform resource locators, zum Ausführen der Transaktion, umfassen.

8. Verfahren nach Anspruch 7, wobei:
die Transaktionsinformationen der Transaktion einen oder mehrere Parameter, um die eine oder die mehreren URL aufzurufen und ein oder mehrere zurückgegebene Ergebnisse vom Aufrufen der einen oder mehreren URL umfassen.

9. Verfahren nach einem der vorhergehenden Ansprüche, wobei die digitale Zusammenfassung der Operationsinformationen einen Hash-Wert der Operationsinformationen umfasst.

10. Verfahren nach einem der vorhergehenden Ansprüche, wobei:
die Blockchain eine Konsortium-Blockchain ist.

11. Authentifizierungssystem (118), umfassend:
einen oder mehrere Prozessoren; und
einen oder mehrere computerlesbare Speicher, welche mit dem einen oder den mehreren Prozessoren gekoppelt sind und Anweisungen aufweisen, die darauf gespeichert sind, welche durch den einen oder die mehreren Prozessoren ausführbar sind, um das Verfahren nach einem der Ansprüche 1 bis 10 auszuführen.

12. Authentifizierungsvorrichtung, umfassend eine Mehrzahl von Modulen für das Ausführen des Verfahrens nach einem der Ansprüche 1 bis 10.

## Revendications

1. Procédé d'authentification implémenté par ordinateur, comprenant :
en réponse à une ouverture de session, la génération (501) d'un résumé numérique d'informations d'identité pour l'ouverture de session, dans lequel les informations d'identité comprennent une identité et un niveau d'autorisation d'un utilisateur demandant ou autorisant l'exécution d'une transaction ;
la transmission (502) du résumé numérique des informations d'identité à un ou plusieurs nœuds de la chaîne de blocs pour le stockage dans la chaîne de bloc ;
l'obtention (503), à partir de la chaîne de bloc, d'une identification de transaction de chaîne de bloc associée au résumé numérique des informations d'identité ;
en réponse à la réussite de l'ouverture de session, l'exécution (504) de la transaction ;
la génération (511) d'un résumé numérique d'informations d'opération de la transaction exécutée, dans lequel les informations d'opération incluent des informations de transaction de la transaction et l'identification de transaction de chaîne de bloc associée au résumé numérique des informations d'identité ;
la transmission (512) du résumé numérique des informations d'opération à un ou plusieurs nœuds de la chaîne de bloc pour le stockage dans la chaîne de bloc ;
l'obtention (513) d'une identification de transaction de chaîne de bloc associée au résumé numérique des informations d'opération ;
l'obtention (514), à partir d'un dispositif informatique, de données d'audit pour l'authentification par rapport aux informations d'opération de la transaction exécutée ;
la génération (515) d'un résumé numérique des données d'audit ;
la récupération (516) du résumé numérique des informations d'opération à partir de la chaîne de bloc selon l'identification de transaction de chaîne de bloc correspondant au résumé numérique des informations d'opération ; et
la détermination (517) de l'authenticité des données d'audit en vérifiant le résumé numérique généré des données d'audit par rapport au résumé numérique récupéré des informations d'opération.

2. Procédé selon la revendication 1, dans lequel la détermination de l'authenticité des données d'audit en vérifiant le résumé numérique généré des données d'audit par rapport au résumé numérique récupéré des informations d'opération comprend :
en réponse à la détermination que le résumé numérique généré des données d'audit est conforme au résumé numérique récupéré des informations d'opération, la détermination que les données d'audit sont authentiques ; ou
en réponse à la détermination que le résumé numérique généré des données d'audit n'est pas conforme au résumé numérique récupéré des informations d'opération, la détermination que les données d'audit ne sont pas authentiques.

3. Procédé selon l'une quelconque des revendications précédentes, dans lequel les informations d'opération incluent l'un ou plusieurs parmi : le résumé numérique des informations d'identité et les informations d'identité.

4. Procédé selon la revendication 1, dans lequel :
les données d'audit comprennent une identification de la transaction exécutée ; et
avant la récupération du résumé numérique des informations d'opération provenant de la chaîne de bloc en fonction de l'identification de transaction de chaîne de bloc correspondant au résumé numérique des informations d'opération, le procédé comprend en outre : à partir d'un système de stockage extérieur à la chaîne de bloc, l'obtention, sur la base de l'identification de la transaction exécutée, de l'identification de la transaction de chaîne de bloc correspondant au résumé numérique des informations d'opération.

5. Procédé selon l'une quelconque des revendications précédentes, dans lequel la transmission du résumé numérique des informations d'opération à un ou plusieurs nœuds de la chaîne de bloc pour le stockage dans la chaîne de bloc comprend :
l'écriture du résumé numérique des informations d'opération et d'un processus cryptographique utilisé pour la génération du résumé numérique des informations d'opération en un contrat de chaîne de bloc ; et
le fait d'amener les un ou plusieurs nœuds à initier une transaction de chaîne de bloc pour déployer le contrat de chaîne de bloc.

6. Procédé selon la revendication 5, dans lequel :
la génération du résumé numérique des données d'audit comprend la génération du résumé numérique des données d'audit sur la base du processus cryptographique utilisé pour la génération du résumé numérique des informations d'opération.

7. Procédé selon l'une quelconque des revendications précédentes, dans lequel :
les informations de transaction de la transaction comprennent une ou plusieurs URL, adresse universelle, pour l'exécution de la transaction.

8. Procédé selon la revendication 7, dans lequel :
les informations de transaction de la transaction comprennent un ou plusieurs paramètres pour appeler les une ou plusieurs URL et un ou plusieurs résultats renvoyés depuis l'appel des une ou plusieurs URL.

9. Procédé selon l'une quelconque des revendications précédentes, dans lequel le résumé numérique des informations d'opération comprend une valeur de hachage des informations d'opération.

10. Procédé selon l'une quelconque des revendications précédentes, dans lequel :
la chaîne de bloc est une chaîne de bloc à consortium.

11. Système d'authentification (118), comprenant :
un ou plusieurs processeurs ; et
une ou plusieurs mémoires lisibles par ordinateur couplées aux un ou plusieurs processeurs et ayant des instructions stockées dessus qui sont exécutables par les un ou plusieurs processeurs pour réaliser le procédé selon l'une quelconque des revendications 1 à 10.

12. Appareil d'authentification comprenant une pluralité de modules pour réaliser le procédé selon l'une quelconque des revendications 1 à 10.
